# EUROPÄISCHE PATENTSCHRIFT

(11) **EP 2 207 662 B1**
(45) Veröffentlichungstag und Bekanntmachung des Hinweises auf die Patenterteilung: **20.03.2013**
(21) Anmeldenummer: 08785804.9
(22) Anmeldetag: 04.09.2008
(51) Int. Cl.: B29C 47/50, B29C 47/10, B29C 47/76, B29C 47/88

(54) **VERFAHREN UND VORRICHTUNG ZUR KONTINUIERLICHEN HERSTELLUNG EINES EXTRUDATS AUS FEINTEILIGEM PFLANZENMATERIAL UND EINEM THERMOPLASTISCHEN MATERIAL**
PROCESS AND DEVICE FOR THE CONTINUOUS PRODUCTION OF AN EXTRUDATE FROM FINELY DIVIDED PLANT MATERIAL AND A THERMOPLASTIC MATERIAL
PROCÉDÉ ET DISPOSITIF DE FABRICATION EN CONTINU D'UN EXTRUDÉ DE MATÉRIAU VÉGÉTAL EN FINES PARTICULES ET D'UN MATÉRIAU THERMOPLASTIQUE

(30) Priorität: 18.10.2007 DE 102007050317; 23.02.2008 DE 102008010796
(43) Veröffentlichungstag der Anmeldung: 21.07.2010
(73) Patentinhaber: Reifenhäuser GmbH & Co. KG Maschinenfabrik, 53839 Troisdorf (DE)
(72) Erfinder: THEWES, Dieter, 53844 Troisdorf (DE); REIMANN, Andreas, 51065 Köln (DE); FEIGE, Stefan, 53721 Siegburg (DE)
(74) Vertreter: Wagner, Matthias
(86) Internationale Anmeldenummer: PCT/EP2008/007205
(87) Internationale Veröffentlichungsnummer: WO 2009/052892

(56) Entgegenhaltungen:
- WO-A-00/40384
- WO-A-2005/039843
- AT-B- 307 012
- JP-A- 60 141 519
- US-A1- 2002 185 771
- US-A1- 2006 199 893
- US-A1- 2006 255 496

## Beschreibung

Die Erfindung betrifft ein Verfahren zur kontinuierlichen Herstellung eines Extrudats aus feinteiligem Pflanzenmaterial und einem thermoplastischen Material, bei dem einer als Doppelschneckenextruder ausgebildeten Extrusionseinrichtung mit Eintritts- und Austrittsöffnungen das feinteilige Pflanzenmaterial und das thermoplastische Material zugeführt wird, die zugeführten Materialien miteinander vermischt, entgast und gemeinsam aus der Extrusionseinrichtung unter Ausbildung des Extrudats extrudiert werden, wobei das Pflanzenmaterial in das thermoplastische Material eingebettet ist.

Extrudate, beispielsweise in Form kontinuierlich hergestellter Formkörper, wie Profile, Platten und dergleichen aus einem in thermoplastisches Material eingebetteten feinteiligen Pflanzenmaterial sind bekannt und werden üblicherweise mit der Bezeichnung WPC (Wood-Plastic-Composite) bezeichnet.

Typischerweise bestehen WPC-Extrudate aus einem Holzfaser- oder Holzmehlanteil von 50 bis 90% und einer Kunststoffmatrix aus Polypropylen (PP) oder weniger häufig aus Polyethylen (PE). Gegenüber reinen Holzwerkstoffen bieten WPC-Extrudate den Vorteil der freien dreidimensionalen Formbarkeit des Werkstoffes und eine erheblich größere Feuchteresistenz. Gegenüber Vollkunststoffen bieten WPC-Extrudate ebenfalls Vorteile, nämlich z.B. höhere Steifigkeiten und einen deutlich geringeren thermischen Ausdehnungskoeffizienten. Beispiele von Anwendungen derartiger WPC-Formkörper finden sich z.B. als Holzersatz für Außenbodenbeläge sowie Anwendungen im Baubereich und der Möbelindustrie.

Die Verfahrensführung zur Herstellung von derartigen WPC-Extrudaten, bei denen idealerweise das Pflanzenmaterial vollständig in das thermoplastische Material eingebettet sein soll, das thermoplastische Material mithin die Trägermatrix bildet, ist nicht einheitlich.

So ist aus der DE 100 16 508 A1 und der US 2006/0199893 A1 bekannt, einer Extrusionseinrichtung zunächst die Kunststoffmasse zuzuführen, und in der Extrusionseinrichtung die Kunststoffmasse zu verdichten und zu plastifizieren und dann die Fasern in die Kunststoffschmelze zu geben, um sie sodann mit der Kunststoffmasse zu homogenisieren und zum Extrudat zu extrudieren.

Aus der AT 307 012 ist eine Einrichtung zur kontinuierlichen Herstellung von faserstoffhaltigen Pressmassen bekannt, die über zwei kaskadenförmig angeordnete Misch- und Knetmaschinen mit rotierenden und gleichzeitig hin- und hergehenden Wellen verfügt, wobei die erste Misch- und Knetmaschine die Pressmassen-Rohstoffe durchknetet und nachfolgend an den Einfülltrichter der zweiten Misch- und Knetmaschine übergibt. In diesen Einfülltrichter werden auch die Faserstoffe eingegeben und sodann gemeinsam in der zweiten Misch- und Knetmaschine fertig durchmischt und können nachfolgend zerteilt oder granuliert werden.

Ein gattungsgemäßes Verfahren, bei welchem zunächst das Pflanzenmaterial dem Extruder zugeführt wird und über eine gewisse Zeit alleine, d.h. ohne Beigabe von thermoplastischem Material in dem Extruder gefördert, hierbei erwärmt und verdichtet wird, wodurch eine Entfeuchtung bewirkt wird und erst anschließend die Kunststoffmasse beigegeben wird, ist aus der DE 198 60 836 C1 und der korrespondierenden WO 00/40384 A1 bekannt.

Die vorgenannten Verfahren sind hinsichtlich der erreichbaren Ausstoßleistungen, die für eine wirtschaftliche Produktion von WPC-Extrudaten bestimmend ist, verbesserungswürdig und stellen darüber hinaus hohe Anforderungen an die Qualität des verwendeten Pflanzenmaterials, insbesondere dessen Feuchtegehalt und können bei schwankender Produktqualität zu Schwierigkeiten führen, etwa dahingehend, dass das zugeführte Pflanzenmaterial zur Klumpenbildung im thermoplastischen Material neigt und von daher keine wünschenswerte Homogenisierung der Materialien möglich ist.

Aufgabe der Erfindung ist es daher, ein Verfahren sowie eine Vorrichtung vorzuschlagen, mit der die eingangs geschilderten Nachteile des Standes der Technik überwunden werden.

Zur Lösung der gestellten Aufgabe schlägt die Erfindung ein Verfahren gemäß den Merkmalen des Patentanspruchs 1 vor. Eine erfindungsgemäße Vorrichtung ist Gegenstand des Patentanspruchs 9.

Weitere Ausgestaltungen und Einzelheiten der erfindungsgemäßen Lehre sind Gegenstand der abhängigen Ansprüche.

Der erfindungsgemäße Vorschlag sieht vor, dass die Zuführung des Pflanzenmaterials und des thermoplastischen Materials in die Extrusionseinrichtung an einer gemeinsamen Position bewirkt wird, wobei das thermoplastische Material vor der Zuführung in die Extrusionseinrichtung in einen separaten Plastifizierextruder plastifiziert und von diesem in bereits plastifiziertem Zustand der Extrusionseinrichtung zugeführt wird und anschließend das in der Extrusionseinrichtung befindliche pflanzliche Material und mit dem thermoplastischen Material gemeinsam entgast wird.

Der erfindungsgemäße Vorschlag beruht von daher darauf, einer als Doppelschneckenextruder ausgebildeten Extrusionseinrichtung das feinteilige Pflanzenmaterial zuzuführen, jedoch gleichzeitig das thermoplastische Material der als Doppelschneckenextruder ausgebildeten Extrusionseinrichtung zuzuführen, wobei das thermoplastische Material in einem separaten Plastifizierextruder bereits plastifiziert und folglich als Schmelze in flüssiger oder zumindest pastöser Form unter dem Druck des Plastifizierextruders in die Extrusionseinrichtung eingeleitet wird.

Unter gleichzeitiger Zuführung des Pflanzenmaterials und des thermoplastischen Materials wird erfindungsgemäß verstanden, dass in Extrusionsrichtung betrachtet das Pflanzenmaterial und das thermoplastische Material an gleicher Stelle in die Extrusionseinrichtung zugeführt werden, so dass es mithin nicht mehr erforderlich ist, das zunächst zugeführte pflanzliche Material über eine gewisse Distanz alleine in Extrusionsrichtung zu fördern und Verarbeitungsschritten, beispielsweise einer Entfeuchtung zu unterwerfen.

Das pflanzliche Material und das thermoplastische Material werden gemeinsam im so genannten Einzugsbereich des Extruders zugeführt, wobei das thermoplastische Material zuvor in einem Plastifizierextruder bereits vollständig aufgeschmolzen ist und von daher als flüssige oder pastöse Schmelze unter Druck in die Extrusionseinrichtung eingeleitet wird.

Der vom Plastifizierextruder ausgangsseitig erzeugte Druck, mit welchem das plastifizierte thermoplastische Material der Extrusionseinrichtung zugeführt wird, beträgt bevorzugt weniger als 20 bar, vorzugsweise etwa 10 bis 15 bar.

Bei dem eingesetzten thermoplastischen Material handelt es sich bevorzugt um ein Polyolefin, beispielsweise ein Polypropylen oder auch ein Polyethylen hoher Dichte. Es können auch andere thermoplastische Materialien, wie z.B. Polyamid oder Polyvinylchlorid eingesetzt werden.

Bei dem pflanzlichen Material kann es sich um in großen Mengen verfügbare Holzfasern oder Holzmehl, Getreidefasern, Stroh, Naturfasern wie Kokos oder Palmfasern und auch um MDF-Späne handeln. Diese Pflanzenmaterialien können einzeln oder in Abmischungen derselben verwendet werden.

Der Anteil des zugeführten pflanzlichen Materials beläuft sich auf mindestens 50%, vorzugsweise mindestens 70%, so dass der verbleibende Anteil vom thermoplastischen Material und ggf. weiteren Verarbeitungshilfsmitteln gebildet wird.

Das pflanzliche Material sollte durchschnittliche Partikelgrößen von weniger als 4 mm aufweisen, um eine gute Homogenisierung zu ermöglichen.

Das erfindungsgemäße Verfahren stellt an den Feuchtegehalt des verwendeten pflanzlichen Materials nur geringe Anforderungen. Erfindungsgemäß ist vorgesehen, dass das pflanzliche Material einen Feuchtegehalt von weniger als 10%, vorzugsweise 5 bis 8% aufweist. Derartige Feuchtegehalte liegen üblicherweise in den am Markt erhaltenen pflanzlichen Materialien, wie sie für den Einsatz bei der erfindungsgemäßen Vorrichtung vorgesehen sind, ohnehin vor, so dass das erfindungsgemäße Verfahren ohne zusätzlichen Entfeuchtungsschritt für das eingesetzte pflanzliche Material auskommt.

Die im pflanzlichen Material enthaltene Feuchte wird erfindungsgemäß in der Extrusionseinrichtung durch Entgasung abgeführt, wobei zum Zeitpunkt der Entgasung das pflanzliche Material bereits mit dem im plastifizierten Zustand zugeführten thermoplastischen Material vermischt ist.

Um gewisse Produkteigenschaften des hergestellten Extrudats beeinflussen zu können und die Verarbeitung zu erleichtern, kann darüber hinaus dem pflanzlichen Material vor der Zuführung in die Extrusionseinrichtung mindestens ein Additiv, wie UV-Stabilisatoren, Antifoulingmittel, Fungizide, Pflanzschutzmittel, Flammschutzmittel, Farbstoff oder Verarbeitungshilfsmittel, wie Gleitmittel zugemischt werden, und wird dann gemeinsam mit dem pflanzlichen Material in die Extrusionseinrichtung eingebracht.

Eine im Rahmen der Erfindung vorgeschlagene Vorrichtung, die sich insbesondere zur Durchführung des erfindungsgemäßen Verfahrens eignet, zeichnet sich dadurch aus, dass sie eine als Doppelschneckenextruder ausgebildete Extrusionseinrichtung mit einer Eintrittsöffnung und einer Austrittsöffnung umfasst und eine der Eintrittsöffnung zugeordnete Zuführeinrichtung für das Pflanzenmaterial und das thermoplastische Material sowie eine zwischen Eintritts- und Austrittsöffnung ausgebildete Entgasungsöffnung aufweist. Die Zuführeinrichtung umfasst zwei unmittelbar benachbart in Extrusionsrichtung folgende Zuführkanäle, von denen einer mit einer Dosierstation für das Pflanzenmaterial verbunden ist und der andere über ein beheiztes Verbindungsrohr mit einem Plastifizierextruder für das thermoplastische Material verbunden ist.

Vorzugsweise dient der in Extrusionsrichtung betrachtet erste Zuführkanal der Zuführung des Pflanzenmaterials und ist von daher mit der Dosierstation für das Pflanzen-material verbunden und der unmittelbar nachfolgende zweite Zuführkanal ist mit dem Plastifizierextruder für das thermoplastische Material verbunden. Es kann jedoch auch die umgekehrte Anordnung gewählt werden.

Die Extrusionseinrichtung umfasst nach einem Vorschlag der Erfindung einen Doppelschneckenextruder mit gegenläufig rotierenden Schnecken, die vorzugsweise miteinander kämmen.

Nach einem anderen Vorschlag der Erfindung kann die Extrusionseinrichtung auch von einem Doppelschneckenextruder mit gleichsinnig rotierenden Schnecken gebildet werden. Sofern das Druckvermögen eines solchen mit gleichsinnig rotierenden Schnecken arbeitenden Doppelschneckenextruders nicht ausreichend sein, kann in diesem Falle eine nachgeordnete Schmelzepumpe vorgesehen werden, um genügend Druck für die Extrusion des Extrudats aus einem entsprechenden Werkzeug aufzubringen.

Der Plastifizierextruder zur Plastifizierung und Einbringung des bereits plastifizierten thermoplastischen Materials in die Extrusionseinrichtung ist nach einem Vorschlag der Erfindung als Einschneckenextruder ausgebildet und über ein beheizbares Verbindungsrohr mit der Zuführeinrichtung verbunden.

Alternativ kann als Plastifizierextruder auch ein Mehrschneckenextruder, insbesondere ein Doppelschneckenextruder eingesetzt werden, der es erlaubt, das thermoplastische Material nicht nur zu plastifizieren, sondern auch Füllstoffe und Additive bei Bedarf in das thermoplastische Material einzuarbeiten. Ein solcher als Plastifizierextruder verwendeter Doppelschneckenextruder kann sowohl mit gleich- oder gegensinnig arbeitenden Schnecken ausgerüstet sein. Beispielsweise für die Verarbeitung eines PVC Dry-Blends ist ein mit gegenläufigen Schnecken arbeitender Doppelschnecken-Plastifizierextruder besonders geeignet.

Die Dosierstation kann mindestens einen Dosierbehälter für Pflanzenmaterialkomponenten aufweisen, wobei durch Ausbildung entsprechend mehrerer Dosierbehälter für Pflanzenmaterialkomponenten auch mehrere verschiedene Pflanzenmaterialkomponenten gemeinsam verarbeitet werden können. Darüber hinaus verfügt die Dosierstation bevorzugt über mindestens eine Dosiereinheit, mittels derer Farbstoffe, Additive und/oder Verarbeitungshilfsmittel zudosiert werden können und von daher gemeinsam mit den Pflanzenmaterialkomponenten der Extrusionseinrichtung zugeführt werden.

Weitere Ausgestaltungen und Einzelheiten der Erfindung werden nachfolgend anhand der ein Ausführungsbeispiel darstellenden Zeichnung erläutert:
Die einzige Figur zeigt in einer stark vereinfachten schematisierten Darstellung eine Extrusionseinrichtung 1, die als Doppelschneckenextruder mit zwei gegenläufig rotierenden und miteinander kämmenden Schnecken ausgebildet ist.

Die Extrusionseinrichtung 1 verfügt an ihrem einen Ende über eine Eintrittsöffnung 10 für die zu verarbeitenden Materialien und an ihrem anderen Ende über eine Austrittsöffnung 11, der ein nicht näher bezeichnetes Werkzeug 5 nachgeordnet ist, aus welchem das gebildete Extrudat 6 in Pfeilrichtung P entsprechend der mit Pfeil E gekennzeichneten Extrusionsrichtung austritt.

Man erkennt ferner einen von der Extrusionseinrichtung 1 separat vorgehaltenen Plastifizierextruder 4 sowie eine Dosiereinrichtung 3, die beide in nachfolgend näher geschilderter Weise mit der Eintrittsöffnung 10 der Extrusionseinrichtung 1 kommunizieren.

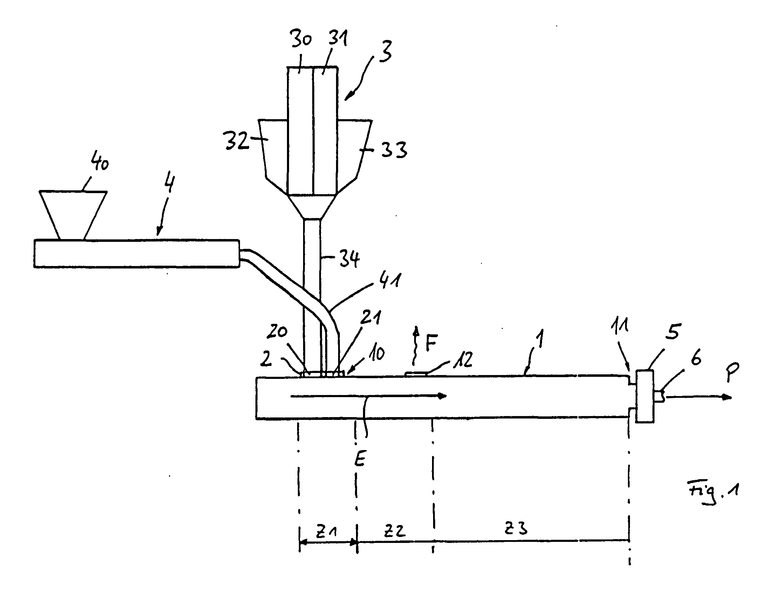

Die Eintrittsöffnung 10 der Extrusionseinrichtung 1 ist mit einer Zuführeinrichtung 2 versehen, welche zwei Zuführkanäle aufweist, nämlich einen in Extrusionsrichtung betrachtet ersten Zuführkanal 20 und einen unmittelbar nachfolgend angeordneten zweiten Zuführkanal 21. Da beide Zuführkanäle 20, 21 über die Eintrittsöffnung 10 mit der Extrusionseinrichtung 1 kommunizieren, gelangen über diese Zuführkanäle 20, 21 eingeleitete Materialien in der gewählten Reihenfolge in die Einzugszone des Extruders, die in Figur 1 mit Z1 bezeichnet ist.

Hierbei ist der in Extrusionsrichtung betrachtet erste Zuführkanal 20 über ein Verbindungsrohr 34 mit einer Dosierstation 3 verbunden, die mehrere, hier zwei Dosierbehälter 30, 31 für feinteilige Komponenten des zu verarbeitenden Pflanzenmaterials aufweist, sowie mehrere, hier zwei Dosiereinheiten 32, 33 für Farbstoffe, Additive und/oder Verarbeitungshilfsmittel zusätzlich umfasst. Alle Komponenten der Dosierstation 3 werden gemeinsam über das Verbindungsrohr 34 und den ersten Zuführkanal 20 in die Extrusionseinrichtung 1 eingeleitet.

Darüber hinaus wird der separat vorgesehene Plastifizierextruder 4, beispielsweise ein Einschneckenextruder über eine Aufgabeeinrichtung 40 mit dem zu verarbeitenden thermoplastischen Material, beispielsweise reinem Polypropylen beschickt. Der Plastifizierextruder 4 erstellt aus diesem reinen Polypropylen in üblicher und an sich bekannter Weise eine Polypropylenschmelze, die der Plastifizierextruder 4 unter entsprechendem Druck von z.B. 10 bis 15 bar über ein beheiztes Verbindungsrohr 41 in den zweiten Zuführkanal 21 der Zuführeinrichtung 2 für die Extrusionseinrichtung 1 einleitet.

Insofern erfolgt die Einbringen des aufgeschmolzenen und plastifizierten thermoplastischen Materials ebenfalls in der Einzugszone Z1 der Extrusionseinrichtung 1, und zwar unmittelbar nachfolgend zur Zuführung des pflanzlichen Materials und gegebenenfalls weiterer Additive, Farbstoffe und/oder Verarbeitungshilfsmittel über das Verbindungsrohr 34 und den ersten Zuführkanal 20.

Der Abstand zwischen den beiden Zuführkanälen 20, 21 beträgt etwa 1 - 2 d, wobei d den Durchmesser der nicht dargestellten Schnecken des Doppelschneckenextruders der Extrusionseinrichtung 1 bezeichnet.

Der Arbeitsweise des Doppelschneckenextruders der Extrusionseinrichtung 1 in Pfeilrichtung E folgend wird sodann in einer zweiten Zone Z2 das gemeinsam in der Zone Z1 aufgegebene Gemisch homogenisiert, wobei der Feuchtegehalt im zugeführten Pflanzenmaterial über eine Entgasungsöffnung 12, welche zwischen Eintrittsöffnung 10 und Austrittsöffnung 11 der Extrusionseinrichtung 1 angeordnet ist, gegen Umgebungsdruck entfernt wird. Tatsächlich entweicht über die Entgasungsöffnung 12 die enthaltene Feuchte gemäß Pfeil F.

In der weiteren, hier nicht näher dargestellten Zone Z3 wird das Gemisch aus pflanzlichem Material und thermoplastischem Material weiter vermengt und unter hohem Druck durch das nicht näher dargestellte Extrusionswerkzeug 5 zu dem gewünschten strangförmigen Extrudat 6 extrudiert, welches die Extrusionseinrichtung 1 in Pfeilrichtung P verlässt.

Es versteht sich, dass nachfolgend zur Extrusionseinrichtung 1 weitere Bearbeitungsstationen, beispielsweise temperierbare Formplatten, Kühlstrecken, Wassersprühtanks sowie Sägevorrichtung und dergleichen mehr folgen können.

### Ausführungsbeispiel:

Es wurde als Plastifiziereinrichtung 1 ein Doppelschneckenextruder der Firma Reifenhäuser der Baureihe BT 75-30D mit einem Schneckendurchmesser von 75 mm und einem Verhältnis UD von 30 eingesetzt, der über gegenläufig kämmende Schneckenpaare verfügte.

Aus einem Einschnecken-Plastifizierextruder wurde ein thermoplastisches Material in einer Menge von 20% bezogen auf das erhaltene Extrudat plastifiziert und der Extrusionseinrichtung zugeführt, während andererseits 80% eines feinteiligen Holzmehls einer durchschnittlichen Korngröße < 4 mm der Extrusionseinrichtung zugeführt wurden.

Diese beiden Materialien wurden gemeinsam zu einem WPC-Extrudat in Profilform extrudiert, und zwar bei einer Geschwindigkeit von ca. 1,5 m/Min. und einem Profilgewicht von ca. 2,5 kg/m.

Das erhaltene Extrudat zeichnete sich durch exzellente Homogenisierung des zugeführten Pflanzenmaterials im thermoplastischen Material und durch gute Formkonstanz aus.

## Patentansprüche

1. Verfahren zur kontinuierlichen Herstellung eines Extrudats aus feinteiligem Pflanzenmaterial und einem thermoplastischen Material, bei dem einer als Doppelschneckenextruder ausgebildeten Extrusionseinrichtung (1) mit Eintritts- und Austrittsöffnungen das feinteilige Pflanzenmaterial und das thermoplastische Material zugeführt wird, die zugeführten Materialien miteinander vermischt, entgast und gemeinsam aus der Extrusionseinrichtung (1) unter Ausbildung des Extrudats (6) extrudiert werden und das Pflanzenmaterial in das thermoplastische Material eingebettet ist, **dadurch gekennzeichnet, dass** die Zuführung des Pflanzenmaterials und des thermoplastischen Materials in die Extrusionseinrichtung (1) an einer gemeinsamen Position bewirkt wird, das thermoplastische Material vor der Zuführung in die Extrusionseinrichtung (1) in einem separaten Plastifizierextruder (4) plastifiziert und von diesem in plastifiziertem Zustand und unter dem Druck des Plastifizierextruders (4) der Extrusionseinrichtung (1) zugeführt wird und anschließend das pflanzliche Material mit dem thermoplastischen Material gemeinsam entgast wird.

2. Verfahren nach Anspruch 1, **dadurch gekennzeichnet, dass** das thermoplastische Material ein Polyolefin ist.

3. Verfahren nach Anspruch 1 oder 2, **dadurch gekennzeichnet, dass** das pflanzliche Material mindestens in einem Anteil von 50% der Extrusionseinrichtung zugeführt wird.

4. Verfahren nach einem der Ansprüche 1 bis 3, **dadurch gekennzeichnet, dass** das pflanzliche Material eine durchschnittliche Partikelgröße von weniger als 4 mm aufweist.

5. Verfahren nach einem der Ansprüche 1 bis 4, **dadurch gekennzeichnet, dass** das pflanzliche Material einen Feuchtegehalt von weniger als 10%, vorzugsweise 5 bis 8% aufweist.

6. Verfahren nach einem der Ansprüche 1 bis 5, **dadurch gekennzeichnet, dass** das in der Extrusionseinrichtung (1) befindliche pflanzliche Material gemeinsam mit dem thermoplastischen Material gegen Atmosphärendruck entgast wird.

7. Verfahren nach einem der Ansprüche 1 bis 6, **dadurch gekennzeichnet, dass** das pflanzliche Material aus mehreren Komponenten gebildet ist.

8. Verfahren nach einem der Ansprüche 1 bis 7, **dadurch gekennzeichnet, dass** dem pflanzlichen Material vor der Zuführung in die Extrusionseinrichtung (1) Additive, Farbstoffe und/oder Verarbeitungshilfsmittel zugemischt werden.

9. Vorrichtung zur kontinuierlichen Herstellung eines Extrudats aus feinteiligem Pflanzenmaterial und einem thermoplastischen Material, umfassend eine als Doppelschneckenextruder ausgebildete Extrusionseinrichtung (1) mit einer Eintrittsöffnung (10) und einer Austrittsöffnung (11) und einer der Eintrittsöffnung (10) zugeordneten Zuführeinrichtung (2) für das Pflanzenmaterial und das thermoplastische Material, sowie einer zwischen Eintritts- und Austrittsöffnung (10, 11) ausgebildeten Entgasungsöffnung (12), **dadurch gekennzeichnet, dass** die Eintrittsöffnung (10) zwei unmittelbar benachbart in Extrusionsrichtung folgende Zuführkanäle (20, 21) aufweist, von denen der in Extrusionsrichtung (E) betrachtet erste Zuführkanal (20) mit einer Dosierstation (3) für das Pflanzenmaterial verbunden ist und der unmittelbar nachfolgende zweite Zuführkanal (21) über ein beheiztes Verbindungsrohr mit einem Plastifizierextruder (4) für das thermoplastische Material unter entsprechendem Druck verbunden ist.

10. Vorrichtung nach Anspruch 9, **dadurch gekennzeichnet, dass** die Zuführkanäle (20, 21) in Extrusionsrichtung betrachtet einen Abstand von maximal 2 d aufweisen, wobei d der Schneckendurchmesser der Extrusionseinrichtung (1) ist.

11. Vorrichtung nach Anspruch 9 oder 10, **dadurch gekennzeichnet, dass** die Extrusionseinrichtung (1) von einem Doppelschneckenextruder mit gegenläufig rotierenden Schnecken gebildet ist.

12. Vorrichtung nach Anspruch 9 oder 10, **dadurch gekennzeichnet, dass** die Extrusionseinrichtung (1) von einem Doppelschneckenextruder mit gleichsinnig rotierenden Schnecken gebildet ist.

13. Vorrichtung nach Anspruch 12, **dadurch gekennzeichnet, dass** dem Doppelschneckenextruder eine Schmelzepumpe nachgeordnet ist.

14. Vorrichtung nach einem der Ansprüche 9 bis 13, **dadurch gekennzeichnet, dass** der Plastifizierextruder (4) als Einschneckenextruder ausgebildet ist.

15. Vorrichtung nach einem der Ansprüche 9 bis 13, **dadurch gekennzeichnet, dass** der Plastifizierextruder (4) als Doppelschneckenextruder mit gleich- oder gegensinnig rotierenden Schnecken ausgebildet ist.

16. Vorrichtung nach einem der Ansprüche 14 oder 15, **dadurch gekennzeichnet, dass** der Plastifizierextruder (4) über ein beheizbares Verbindungsrohr (41) mit der Zuführeinrichtung kommuniziert.

17. Vorrichtung nach einem der Ansprüche 9 bis 16, **dadurch gekennzeichnet, dass** die Dosierstation (3) mindestens einen Dosierbehälter (30, 31) für Pflanzenmaterialkomponenten und mindestens eine Dosiereinheit (32, 33) für Farbstoffe, Additive und/oder Verarbeitungshilfsmittel aufweist.

## Claims

1. Method for the continuous production of an extrudate from finely-divided plant material and a thermoplastic material, in which the finely-divided plant material and the thermoplastic material are fed to an extrusion device (1), which is configured as a twin-screw extruder, with inlet and outlet openings, the materials that have been fed are mixed with one another, degassed and extruded together from the extrusion device (1) in forming the extrudate (6) and the plant material is embedded in the thermoplastic material, **characterised in that** the feeding of the plant material and the thermoplastic material into the extrusion device (1) is brought about at a common position, the thermoplastic material is plasticised in a separate plasticising extruder (4) before being fed to the extrusion device (1) and is fed from said plasticising extruder in the plasticised state and under the pressure of the plasticising extruder (4) to the extrusion device (1) and the plant material is then degassed together with the thermoplastic material.

2. Method according to claim 1, **characterised in that** the thermoplastic material is a polyolefin.

3. Method according to claim 1 or 2, **characterised in that** the plant material is fed to the extrusion mechanism at least in a proportion of 50%.

4. Method according to any one of claims 1 to 3, **characterised in that** the plant material has a mean particle size of less than 4 mm.

5. Method according to any one of claims 1 to 4, **characterised in that** the plant material has a moisture content of less than 10%, preferably 5 to 8%.

6. Method according to any one of claims 1 to 5, **characterised in that** the plant material located in the extrusion device (1) is degassed together with the thermoplastic material to atmospheric pressure.

7. Method according to any one of claims 1 to 6, **characterised in that** the plant material is formed from a plurality of components.

8. Method according to any one of claims 1 to 7, **characterised in that** additives, colourants and/or auxiliary processing agents are mixed with the plant material before it is fed to the extrusion device (1).

9. Arrangement for the continuous production of an extrudate made of finely-divided plant material and a thermoplastic material, comprising an extrusion device (1), which is configured as a twin-screw extruder, with an inlet opening (10) and an outlet opening (11) and a feed device (2), which is associated with the inlet opening (10), for the plant material and the thermoplastic material, as well as a degassing opening (12) formed between the inlet opening and outlet opening (10, 11), **characterised in that** the inlet opening (10) has two feed channels (20, 21) following directly adjacently in the extrusion direction, of which the first feed channel (20), observed in the extrusion direction (E), is connected to a metering station (3) for the plant material and the second feed channel (21) directly following is connected under corresponding pressure to a plasticising extruder (4) for the thermoplastic material by means of a heated connecting tube.

10. Arrangement according to claim 9, **characterised in that** the feed channels (20, 21), viewed in the extrusion direction, have a spacing of a maximum of 2 d, d being the screw diameter of the extrusion device (1).

11. Arrangement according to claim 9 or 10, **characterised in that** the extrusion device (1) is formed by a twin-screw extruder with screws rotating in opposite directions.

12. Arrangement according to claim 9 or 10, **characterised in that** the extrusion device (1) is formed by a twin-screw extruder with screws rotating in the same direction.

13. Arrangement according to claim 12, **characterised in that** a melt pump is arranged downstream of the twin-screw extruder.

14. Arrangement according to any one of claims 9 to 13, **characterised in that** the plasticising extruder (4) is configured as a single-screw extruder.

15. Arrangement e according to any one of claims 9 to 13, **characterised in that** the plasticising extruder (4) is configured as a twin-screw extruder with screws rotating in the same or opposite directions.

16. Arrangement according to either of claims 14 or 15, **characterised in that** the plasticising extruder (4) communicates with the feed device by means of a heatable connecting tube (41).

17. Arrangement according to any one of claims 9 to 16, **characterised in that** the metering station (3) has at least one metering container (30, 31) for plant material components and at least one metering unit (32, 33) for colourants, additives and/or auxiliary processing agents.

## Revendications

1. Procédé de fabrication en continu d'un extrudé de matériau végétal en fines particules et d'un matériau thermoplastique, pour lequel le matériau végétal en fines particules et le matériau thermoplastique sont amenés à un dispositif d'extrusion (1) réalisé comme une extrudeuse à double vis avec des ouvertures d'entrée et de sortie, les matériaux amenés sont mélangés, dégazés et extrudés ensemble du dispositif d'extrusion (1) en réalisant l'extrudé (6) et le matériau végétal est enrobé dans le matériau thermoplastique, **caractérisé en ce que** l'amenée du matériau végétal et du matériau thermoplastique dans le dispositif d'extrusion (1) est provoquée sur une position commune, **en ce que** le matériau thermoplastique est plastifié avant l'amenée dans le dispositif d'extrusion (1) dans une extrudeuse de plastification séparée (4) et est transmis par celle-ci à l'état plastifié et sous la pression de l'extrudeuse de plastification (4) au dispositif d'extrusion (1) et le matériau végétal est ensuite dégazé avec le matériau thermoplastique.

2. Procédé selon la revendication 1, **caractérisé en ce que** le matériau thermoplastique est une polyoléfine.

3. Procédé selon la revendication 1 ou 2, **caractérisé en ce que** le matériau végétal est amené au moins dans une proportion de 50 % au dispositif d'extrusion.

4. Procédé selon l'une quelconque des revendications 1 à 3, **caractérisé en ce que** le matériau végétal présente une grandeur de particule moyenne inférieure à 4 mm.

5. Procédé selon l'une quelconque des revendications 1 à 4, **caractérisé en ce que** le matériau végétal présente une teneur en humidité inférieure à 10 %, de préférence comprise entre 5 et 8 %.

6. Procédé selon l'une quelconque des revendications 1 à 5, **caractérisé en ce que** le matériau végétal se trouvant dans le dispositif d'extrusion (1) est dégazé conjointement avec le matériau thermoplastique contre la pression atmosphérique.

7. Procédé selon l'une quelconque des revendications 1 à 6, **caractérisé en ce que** le matériau végétal est constitué de plusieurs composants.

8. Procédé selon l'une quelconque des revendications 1 à 7, **caractérisé en ce que** des additifs, des colorants et/ou des produits auxiliaires sont mélangés au matériau végétal avant l'amenée au dispositif d'extrusion (1).

9. Dispositif de fabrication en continu d'un extrudé de matériau végétal en fines particules et d'un matériau thermoplastique, comprenant un dispositif d'extrusion (1) réalisé comme une extrudeuse à double vis avec une ouverture d'entrée (10) et une ouverture de sortie (11) et un dispositif d'amenée (2) associé à l'ouverture d'entrée (10) pour le matériau végétal et le matériau thermoplastique, ainsi qu'avec une ouverture de dégazage (12) réalisée entre l'ouverture d'entrée et l'ouverture de sortie (10, 11), **caractérisé en ce que** l'ouverture d'entrée (10) présente deux canaux d'amenée (20, 21) se suivant directement de manière contigüe dans le sens d'extrusion, dont le premier canal d'amenée (20), vu dans le sens d'extrusion (E), est relié à un poste de dosage (3) pour le matériau végétal et le second canal d'amenée (21) directement suivant est relié par un tube de raccordement chauffé à une extrudeuse de plastification (4) pour le matériau thermoplastique sous pression correspondante.

10. Dispositif selon la revendication 9, **caractérisé en ce que** les canaux d'amenée (20, 21) présentent, vu dans le sens d'extrusion, une distance de 2 d au maximum, d étant le diamètre de vis du dispositif d'extrusion (1).

11. Dispositif selon la revendication 9 ou 10, **caractérisé en ce que** le dispositif d'extrusion (1) est formé par une extrudeuse à double vis avec des vis tournant en sens contraire.

12. Dispositif selon la revendication 9 ou 10, **caractérisé en ce que** le dispositif d'extrusion (1) est formé par une extrudeuse à double vis avec des vis tournant dans le même sens.

13. Dispositif selon la revendication 12, **caractérisé en ce qu'**une pompe à masse fondue est disposée en aval de l'extrudeuse à double vis.

14. Dispositif selon l'une quelconque des revendications 9 à 13, **caractérisé en ce que** l'extrudeuse de plastification (4) est réalisée comme une extrudeuse à simple vis.

15. Dispositif selon l'une quelconque des revendications 9 à 13, **caractérisé en ce que** l'extrudeuse de plastification (4) est réalisée comme une extrudeuse à double vis avec des vis tournant dans le même sens ou en sens contraire.

16. Dispositif selon l'une quelconque des revendications 14 ou 15, **caractérisé en ce que** l'extrudeuse de plastification (4) communique par un tube de raccordement (41) pouvant être chauffé avec le dispositif d'amenée.

17. Dispositif selon l'une quelconque des revendications 9 à 16, **caractérisé en ce que** le poste de dosage (3) présente un récipient de dosage (30, 31) pour des composants de matériau végétal et au moins une unité de dosage (32, 33) pour des colorants, additifs et/ou produits auxiliaires.
